# EUROPÄISCHE PATENTSCHRIFT

(11) **EP 4 295 058 B1**
(45) Veröffentlichungstag und Bekanntmachung des Hinweises auf die Patenterteilung: **29.10.2025**
(21) Anmeldenummer: 22704864.2
(22) Anmeldetag: 31.01.2022
(51) Int. Cl.: F16D 59/02

(54) **ELEKTROMOTOR MIT EINER ELEKTROMAGNETISCH BETÄTIGBAREN BREMSE**
ELECTRIC MOTOR HAVING AN ELECTROMAGNETICALLY ACTUABLE BRAKE
MOTEUR ÉLECTRIQUE ÉQUIPÉ D'UN FREIN À ACTIONNEMENT ÉLECTROMAGNÉTIQUE

(30) Priorität: 22.02.2021 CN 202110196851; 31.03.2021 DE 102021001666
(43) Veröffentlichungstag der Anmeldung: 27.12.2023
(73) Patentinhaber: SEW-EURODRIVE GmbH & Co. KG, 76646 Bruchsal (DE)
(72) Erfinder: JINCHANG, Li, Tianjin (CN)
(86) Internationale Anmeldenummer: PCT/EP2022/025029
(87) Internationale Veröffentlichungsnummer: WO 2022/174977

(56) Entgegenhaltungen:
- WO-A1-2015/177767
- FR-A1- 2 858 487

## Beschreibung

Die Erfindung betrifft einen Elektromotor mit einer elektromagnetisch betätigbaren Bremse.

Es ist allgemein bekannt, dass ein Elektromotor mit einer Bremse ausstattbar ist.

Aus der DE 10 2015 117 681 A1 **ist eine** Bremse mit einer Notlüfteinrichtung bekannt.

Aus der DE 10 2006 040 438 A1 ist eien arretierbare Handlüftung für eine Bremse bekannt.

Aus der DE 103 05 590 A1 ist eine elektromagnetische Federdruckbremse bekannt.

**Aus der** WO 2015/177767 A1 **ist als nächstliegender Stand der Technik Bremse für einen Elektromotor bekannt.**

**Aus der** FR 2 858 487 A1 **ist eine Bremse bekannt.**

Der Erfindung liegt daher die Aufgabe zugrunde, einen sicheren Betrieb eines Bremsmotors zu gewährleisten.

Erfindungsgemäß wird die Aufgabe bei dem Elektromotor nach den in Anspruch 1 angegebenen Merkmalen gelöst.

Wichtige Merkmale der Erfindung bei dem Elektromotor mit einer elektromagnetisch betätigbaren Bremse sind, dass die Bremse mittels eines schwenkbar angeordneten Handlüfthebels, insbesondere Hebelteils, lüftbar ist, insbesondere bei Ausfall der Spannungsversorgung Stromausfall oder Nichtbestromung der Bremse,
wobei am Elektromotor eine Sicherungseinrichtung zur Begrenzung der Schwenkbewegung des Handlüfthebels angeordnet ist,
wobei die Sicherungseinrichtung zumindest ein Halteteil, ein Stangenteil und ein Gelenk aufweist,
wobei ein Halteteil am Elektromotor befestigt ist,
wobei ein Stangenteil mittels eines zwischen Stangenteil und Halteteil ausgebildeten Gelenks drehbar angeordnet ist,
wobei die Begrenzung der Schwenkbewegung des Handlüfthebels von der Drehstellung des Stangenteils abhängig ist.

Von Vorteil ist dabei, dass mittels der Sicherungseinrichtung ein unbeabsichtigtes Lüften der Bremse verhindert ist. Außerdem ist der von der Bestromung oder Nicht-Bestromung der Bremse abhängige Betrieb der Bremse ungestört ausführbar, wenn die Schwenkbewegung begrenzt ist. Bei Aufhebung der Begrenzung, also Aufnahme des Stangenteils in einem Verbindungsteil mit Freigabe der Schwenkbewegung, ist ein handbetätigtes Lüften der Bremse ausführbar.

Bei einer vorteilhaften Ausgestaltung weist die Sicherungseinrichtung ein Verbindungsteil auf,
wobei das Verbindungsteil am Elektromotor befestigt ist. Von Vorteil ist dabei, dass das Stangenteil im Verbindungsteil aufnehmbar ist und somit die Schwenkbewegung freigebbar ist, so dass ein handbetätigtes Lüften, insbesondere beispielswiese bei Nicht-Bestromung der Bremse, ermöglicht ist.

Bei einer vorteilhaften Ausgestaltung weist der Elektromotor ein Gehäuse auf, an dem eine Lüfterhaube des Elektromotors befestigt ist,
insbesondere wobei ein Lüfter mit einer Rotorwelle des Elektromotors drehfest verbunden ist, wobei die Lüfterhaube den Lüfter zumindest teilweise umgibt, insbesondere radial umgibt. Von Vorteil ist dabei, dass die Sicherungseinrichtung an der Lüfterhaube befestigbar ist. Insbesondere ist der von der Bremse in axialer Richtung, also in Richtung der Drehachse der Rotorwelle des Elektromotors, überdeckte Bereich von dem von der Lüfterhaube in axialer Richtung überdeckten Bereich umfasst.

Bei einer vorteilhaften Ausgestaltung ist das Halteteil zwischen dem Verbindungsteil und dem Handlüfthebel, insbesondere Hebelteil, angeordnet,
insbesondere wobei das Halteteil vom Verbindungsteil und vom Handlüfthebel beabstandet angeordnet ist. Von Vorteil ist dabei, dass das Stangenteil entweder zum Handlüfthebel hin oder zum Verbindungsteil hin schwenkbar ist und davon abhängig der Betriebszustand steuerbar ist.

Bei einer vorteilhaften Ausgestaltung ist in einer ersten Drehstellung des Stangenteils die Schwenkbewegung des Handlüfthebels vom Stangenteil, insbesondere Stangenteil über einen mit dem Stangenteil verbundenen Justierkopf, begrenzt und in einer zweiten Drehstellung des Stangenteils ist die Schwenkbewegung nicht vom Stangenteil, insbesondere nicht vom Stangenteil oder Justierkopf, begrenzt. Von Vorteil ist dabei, dass die Betriebsmodi sicher betreibbar sind. Entweder es wird die Bremse bestromungsabhängig gelüftet oder eine Handlüftung ist ausführbar, insbesondere unabhängig von der Bestromung.

Bei einer vorteilhaften Ausgestaltung ist in einer ersten Drehstellung des Stangenteils der Schwenkbewegungsfreiheitsgrad, insbesondere also der von dem Stangenteil für eine Schwenkbewegung zugelassene Schwenkwinkelbereich des Handlüfthebels, kleiner als in der zweiten Drehstellung. Von Vorteil ist dabei, dass die Betriebsmodi sicher betreibbar sind. Entweder es wird die Bremse bestromungsabhängig gelüftet oder eine Handlüftung ist ausführbar, insbesondere unabhängig von der Bestromung.

Erfindungsgemäß weist das Stangenteil einen Justierkopf auf, dessen Schwerpunkt relativ zum Schwerpunkt des Stangenteils verschiebbar angeordnet ist, insbesondere mittels einer Schraubverbindung zwischen Justierkopf und Stangenteil. Von Vorteil ist dabei, dass Abweichungen des Abstands zwischen dem Stangenteil und dem Hebelteil des Handlüfthebels überbrückbar sind durch den nachjustierbaren Justierkopf.

Bei einer vorteilhaften Ausgestaltung ist in der zweiten Drehstellung das Stangenteil im Verbindungsteil aufgenommen. Von Vorteil ist dabei, dass das Stangenteil in dieser Drehstellung mechanisch sicherbar ist, insbesondere im Verbindungsteil einklipsbar oder kraftschlüssig haltbar ist.

Bei einer vorteilhaften Ausgestaltung weist das Stangenteil einen Außengewindebereich auf, auf den eine Mutter aufgeschraubt ist und ein einen Innengewindebereich aufweisender Justierkopf,
wobei der Justierkopf den in der ersten Drehstellung dem Hebelteil zugewandten Endbereich des Stangenteils umgibt und eine Vertiefung aufweist, in welcher das Hebelteil aufnehmbar ist, insbesondere zur Begrenzung des Schwenkbereichs,
insbesondere wobei die Mutter am Justierkopf anliegt und als Kontermutter fungiert. Von Vorteil ist dabei, dass der Justierkopf entlang des Stangenteils verschiebbar ist und somit die Entfernung zwischen Justierkopf und Hebelteil möglichst klein wählbar ist.

Bei einer vorteilhaften Ausgestaltung ist das Halteteil an einem Gehäuseteil oder an einer Lüfterhaube des Elektromotors befestigt. Von Vorteil ist dabei, dass eine einfache Montage ausführbar ist und trotz der im Vergleich zum Gehäuse des Elektromotors weniger steifen Ausführung der Lüfterhaube eine sichere Montage ausführbar ist, da Entfernungsabweichungen mit dem Justierkopf einstellbar sind.

Bei einer vorteilhaften Ausgestaltung ist das Verbindungsteil an einem Gehäuseteil oder an einer Lüfterhaube des Elektromotors befestigt. Von Vorteil ist dabei, dass eine einfache Montage herstellbar ist.

Bei einer vorteilhaften Ausgestaltung weist das Verbindungsteil ein Joch auf, an welchem zwei Schenkel verbunden sind, die jeweils elastisch auslenkbar sind, insbesondere zum kraftschlüssigen Halten oder Einklipsen des in der zweiten Drehstellung zwischen den beiden Schenkeln aufgenommenen Stangenteils,
insbesondere wobei das Joch und die beiden Schenkel einstückig, insbesondere einteilig, ausgeführt sind, insbesondere als aus einem Blechstück gefertigtes Stanzbiegeteil,
insbesondere wobei ein Haltewinkelbereich mit einem ersten der Schenkel verbunden ist oder einstückig ausgeführt ist und der Haltewinkelbereich eine durchgehende Ausnehmung aufweist, durch welche eine Schraube hindurchragt, die in eine Gewindebohrung des Gehäuseteils, insbesondere Motorlagerflansches, eingeschraubt ist. Von Vorteil ist dabei, dass das Stangenteil sicher und kraftschlüssig befestigbar ist. Aber auch ein Einklipsen ist ausführbar.

Bei einer vorteilhaften Ausgestaltung weist die Bremse einen mit der Rotorwelle des Elektromotors drehfest und axial verschiebbar angeordneten Bremsbelagträger auf,
insbesondere wobei der Bremsbelagträger eine Innenverzahnung aufweist, die im Eingriff ist mit einer an der Rotorwelle angeordneten Verzahnung. Von Vorteil ist dabei, dass die Bremse elektrisch steuerbar ist, wenn der Handlüfthebel in der ersten Drehstellung vom Justierkopf des Stangenteils gehalten wird, und eine Handlüftung ausführbar ist, wenn der Handlüfthebel in der zweiten Drehstellung angeordnet ist.

Bei einer vorteilhaften Ausgestaltung weist die Bremse einen Magnetkörper auf, in welchem eine Spule der Bremse aufgenommen ist,
wobei axial zwischen dem Magnetkörper und dem Bremsbelagträger eine Ankerscheibe angeordnet ist, die drehfest mit dem Magnetkörper verbunden ist und relativ zum Magnetkörper verschiebbar angeordnet ist. Von Vorteil ist dabei, dass eine elektromagnetische Betätigung der Bremse in einfacher Weise realisierbar ist, so lange der Handlüfthebel der Ankerscheibe einen ausreichenden Arbeitsbereich freigibt.

Bei einer vorteilhaften Ausgestaltung ist der Handlüfthebel, insbesondere das Hebelteil, über ein Gelenk mit einem Begrenzungsmittel verbunden, das in axialer Richtung verschiebbar angeordnet ist, wobei das Begrenzungsmittel die Ankerscheibe axial begrenzt,
insbesondere so, dass der maximale Abstand zwischen Ankerscheiben und Magnetkörper abhängig vom Schwenkwinkel des Handlüfthebels, insbesondere Hebelteils, festlegbar ist,
insbesondere wobei das Begrenzungsmittel als durch die Ankerscheibe durchgehender Bolzen ausgeführt ist, der auf der vom Magnetkörper abgewandten Seite der Ankerscheibe eine Verbreiterung aufweist, welche als Begrenzung die Ankerscheibe in axialer Richtung begrenzt,
insbesondere wobei am von der Verbreiterung abgewandten Ende des Bolzens der Bolzen mit dem Handlüfthebel mittels eines Gelenks, insbesondere Drehgelenks, verbunden ist, wobei der Handlüfthebel zum Bolzen einen etwa rechtwinkligen Winkel, insbesondere zwischen 60° und 120°, aufweist. Von Vorteil ist dabei, dass eine einfache mechanische Konstruktion ausführbar ist.

Bei einer vorteilhaften Ausgestaltung ist der Magnetkörper mit dem Gehäuse drehfest verbunden. Von Vorteil ist dabei, dass der Magnetkörper und somit die Ankerscheibe drehfest
mit dem Gehäuse und somit dem Stator des Elektromotors verbunden ist und der Bremsbelagträger der Bremse drehfest mit der Rotorwelle der Bremse verbunden ist.

Die Erfindung wird nun anhand von schematischen Abbildungen näher erläutert:

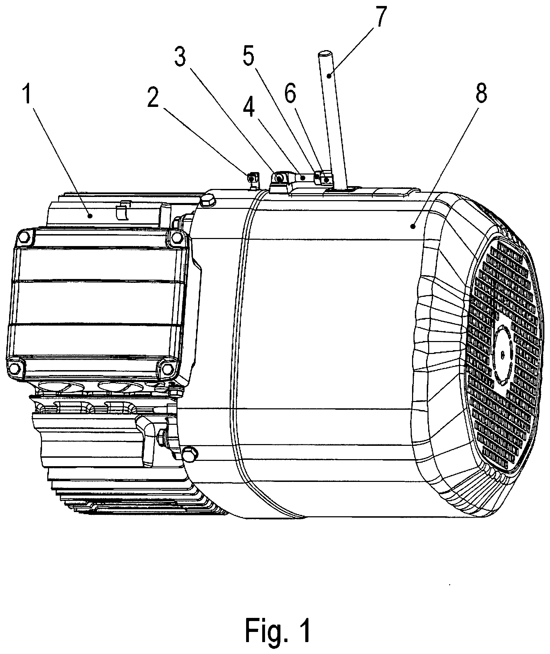

In der Figur 1 ist ein erfindungsgemäßer Elektromotor, der eine mittels eines Hebelteils 7 eines Handlüfthebels lüftbare elektromagnetisch betätigbare Bremse aufweist.
In der Figur 2 ist ein auf einer Lüfterhaube 8 des Elektromotors angeordnetes Verbindungsteil 2 separat in Schrägansicht dargestellt.

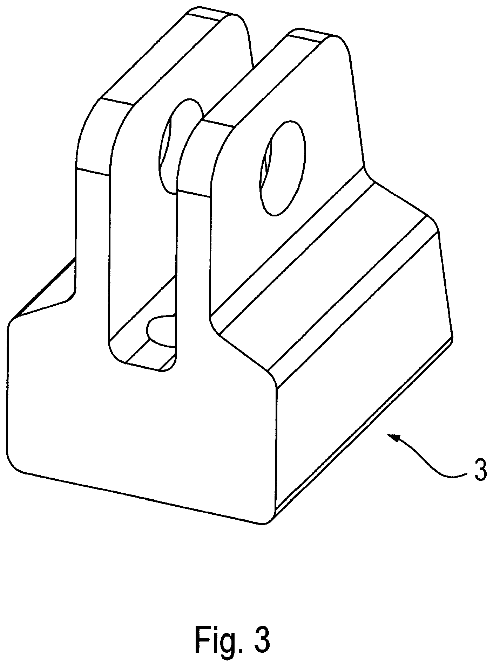

In der Figur 3 ist ein auf der Lüfterhaube 8 des Elektromotors angeordnetes Halteteil 3 separat in Schrägansicht dargestellt.

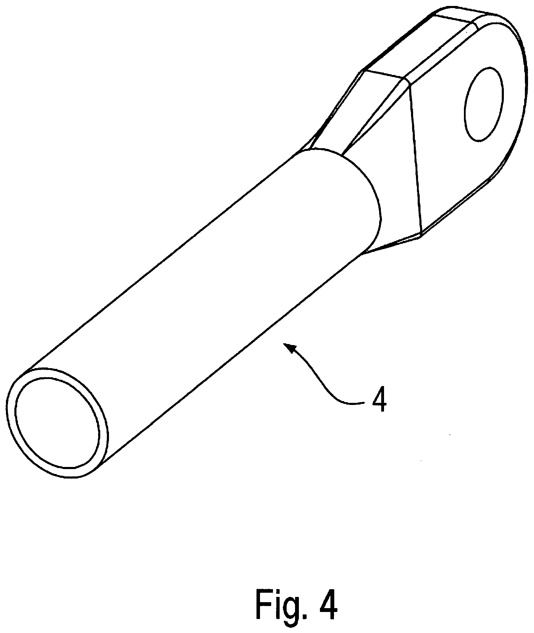

In der Figur 4 ist ein drehbar zum Halteteil 3 gelagertes Stangenteil 4 separat in Schrägansicht dargestellt.

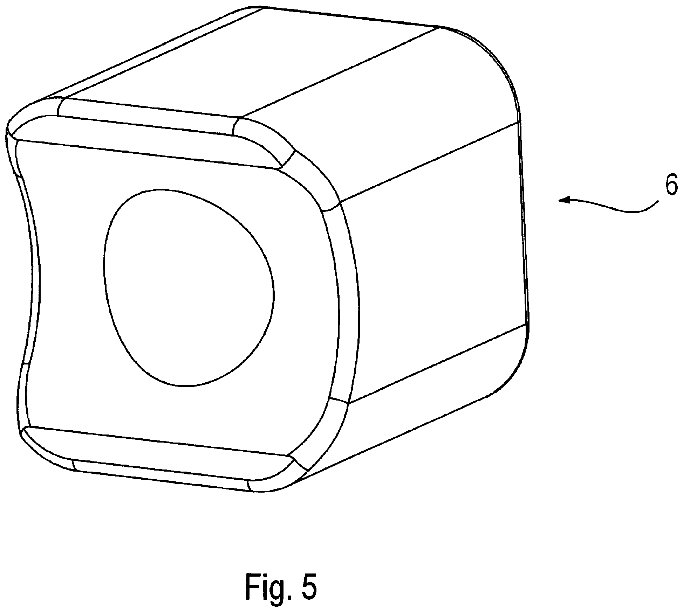

In der Figur 5 ist ein am Ende des Stangenteils 4 befestigter Justierkopf 5 separat in Schrägansicht dargestellt.

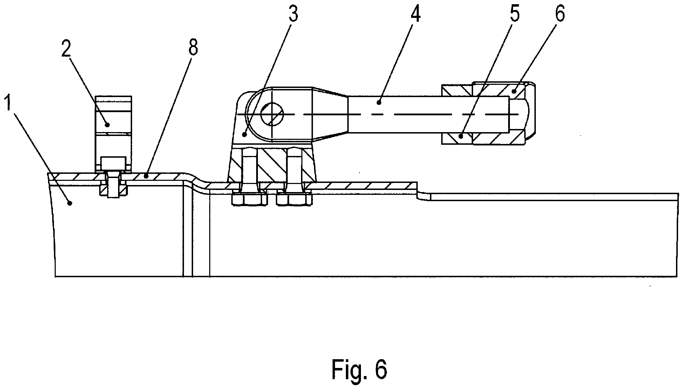

In der Figur 6 ist eine Seitenansicht einer am Elektromotor angeordneten, aus vorgenannten Teilen (2, 3, 4) gebildete Sicherungseinrichtung dargestellt.

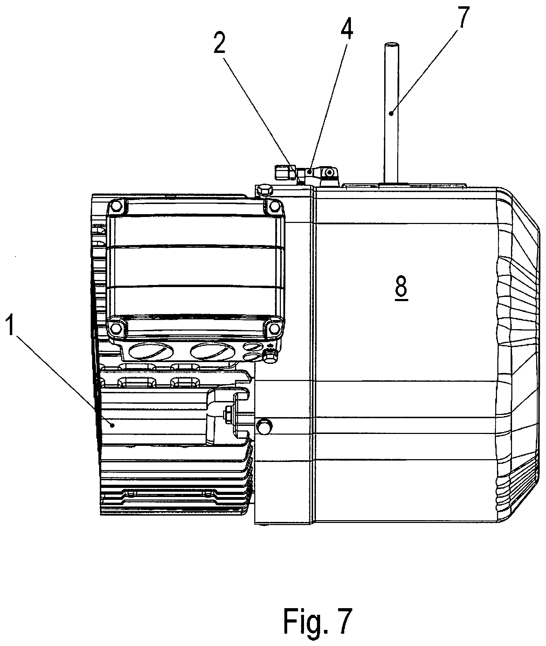

In der Figur 7 ist der Elektromotor in Seitenansicht dargestellt, wobei das Hebelteil 7 in einer ersten Drehstellung sich befindet.

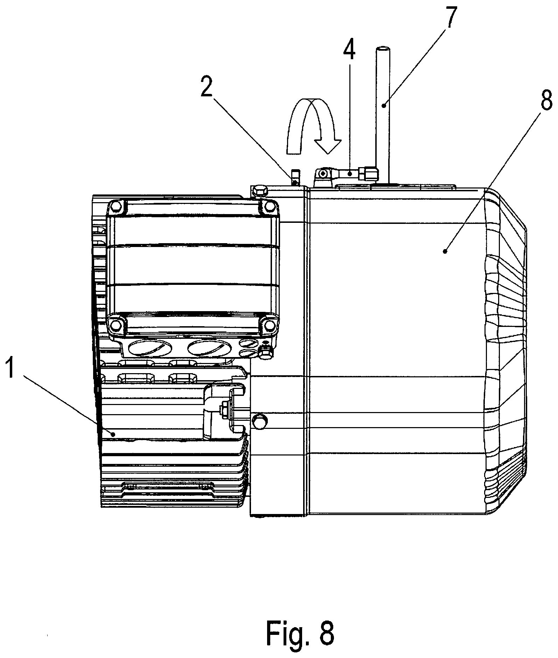

In der Figur 8 ist der Elektromotor in Seitenansicht dargestellt, wobei das Hebelteil 7 in einer zweiten Drehstellung sich befindet.

Wie in den Figuren dargestellt, weist der Elektromotor ein Gehäuse 1 auf, in welchem eine Rotorwelle über im Gehäuse aufgenommene Lager drehbar gelagert ist. Dabei weist das Gehäuse ein Statorgehäuse auf, das axial beidseitig Flanschteile aufweist, die jeweils eines der beiden Lager aufnehmen, welche die Rotorwelle lagern.

B-seitig am Elektromotor angeordnet ist eine elektromagnetisch betätigbare Bremse, welche einen Bremsbelagträger aufweist, der drehfest mit der Rotorwelle des Elektromotors verbindbar ist und dabei axial, insbesondere also parallel zur Drehachse der Rotorwelle, verschiebbar ist.

Hierzu weist der Bremsbelagträger eine Innenverzahnung auf, die im Eingriff steht mit einer Außenverzahnung der Rotorwelle oder mit einer Außenverzahnung eines mit der Rotorwelle drehfest verbundenen Teils. Die Verzahnungen sind dabei mit verschwindendem Schrägungswinkel ausgeführt.

Der Bremsbelagträger weist axial beidseitig einen Bremsbelag auf.

Auf der vom Stator abgewandten Seite eines ersten Flanschteils des Gehäuses 1 ist ein als Spulenkern für eine Spule wirksamer Magnetkörper angeordnet. Vorzugsweise ist der Magnetkörper aus einem ferromagnetischen Stahlguss gefertigt. Der Magnetkörper ist am ersten Flanschteil befestigt, insbesondere mittels Schrauben oder Zugstangen.

Eine ferromagnetisch ausgeführte Ankerscheibe ist axial zwischen dem Flanschteil und dem Magnetkörper angeordnet, insbesondere zwischen dem Bremsbelagträger und dem Magnetkörper.

Der Bremsbelagträger ist axial zwischen der Ankerscheibe und dem ersten Flanschteil angeordnet.

Die Spule ist in einer ringförmigen Vertiefung des Magnetkörpers aufgenommen, wobei die Ringachse der ringförmigen Vertiefung koaxial zur Drehachse der Rotorwelle und somit auch koaxial zur Drehachse des Bremsbelagträgers ausgerichtet.

Bei Bestromung der Spule wird die Ankerscheibe zum Magnetkörper hin gezogen entgegen der von am Magnetkörper abgestützten Federelementen erzeugten Federkraft. Somit ist die Bremse gelüftet.

Bei Nichtbestromung der Spule drücken die Federelemente die Ankerscheibe zum Bremsbelagträger hin, so dass der Bremsbelagträger auf eine am ersten Flanschteil ausgebildete Bremsfläche, insbesondere geschliffen bearbeitete Fläche, hingedrückt wird. Somit ist die Bremse eingefallen und der Bremsbelagträger erzeugt mit seinen Bremsbelägen ein Reibmoment zur Ankerscheibe und zur Bremsfläche hin.

Da bei Nichtbestromung die Bremse eingefallen ist und somit die Ankerscheibe den Bremsbelagträger gegen die am ersten Flanschteil ausgebildete Bremsfläche drückt, wird die mit dem Bremsbelagträger drehfest verbundene Rotorwelle gegenüber dem mit dem ersten Flanschteil drehfest verbundenen Gehäuseteil abgebremst. Um in diesem Zustand eine handbetätigbare Lüftung der Bremse zu ermöglichen, ist an der Bremse ein Handlüfthebel angeordnet, der über ein mit dem Magnetkörper fest verbundenes Schwenklager drehbar angeordnet ist und ein Begrenzungselement, insbesondere Bolzen, axial bewegbar ist, wobei das Begrenzungselement die Ankerscheibe axial begrenzt, also den Abstand zwischen der Ankerscheibe und dem Magnetkörper auf einen Maximalwert begrenzt.

Mittels Schwenkbewegung des Handlüfthebels ist das über ein Gelenk verbundene Begrenzungsmittel verschiebbar und somit die axiale Begrenzung einstellbar. Dies bedeutet, dass der maximale Abstand zwischen Ankerscheiben und Magnetkörper verringerbar ist mittels der Schwenkbewegung des Handlüfthebels. Somit ist die Ankerscheibe vom Handlüfthebel zum Magnetkörper hin bewegbar, insbesondere bei Nichtbestromung der Bremse.

Das Begrenzungsmittel ist beispielhaft ausführbar als durch die Ankerscheibe durchgehender Bolzen, der auf der vom Magnetkörper abgewandten Seite der Ankerscheibe eine Verbreiterung aufweist, welche als Begrenzung die Ankerscheibe in axialer Richtung begrenzt. Am von der Verbreiterung abgewandten Ende des Bolzens ist der Bolzen mit dem Handlüfthebel mittels eines Gelenks, insbesondere Drehgelenks, verbunden, wobei der Handlüfthebel zum Bolzen einen etwa rechtwinkligen Winkel, insbesondere zwischen 60° und 120° aufweist.

Die Rotorwelle ragt vorzugsweise durch eine mittig im Magnetkörper der Bremse vorgesehene Ausnehmung hindurch.

Auf der vom Stator des Elektromotors axial abgewandten Seite des Magnetkörpers ist die Rotorwelle mit einem Lüfter drehfest verbunden, wobei der vom Lüfter geförderte Luftstrom von einer Lüfterhaube zum Kühlen des Elektromotors entlang der Außenseite des Gehäuses des Elektromotors gelenkt. Vorzugsweise weist das Gehäuse sich axial erstreckende Kühlrippen auf, so dass der Luftstrom entlang der Kühlrippen strömt.

Der Handlüfthebel weist ein Hebelteil 7 auf, welches radial aus der Lüfterhaube hervorragt. Die Lüfterhaube weist einen Axialschlitz auf, um die freie Schwenkbewegung des Hebelteils 7 zu ermöglichen.

Erfindungsgemäß ist am Elektromotor eine Sicherungseinrichtung gegen unbeabsichtigtes Schwenken des Handlüfthebels vorgesehen.

Hierzu weist die Sicherungseinrichtung ein Verbindungsteil 2 auf, das von einer Schraube an der Lüfterhaube 8 gehalten ist, welche durch eine durch die Lüfterhaube 8 durchgehende Ausnehmung durchgeführt und in eine Mutter eingeschraubt ist, so dass der Schraubenkopf der Schraube das Verbindungsteil 2 an die Lüfterhaube 8 andrückt. Alternativ ist die Schraube und Mutter auch umgekehrt anordenbar.

Ebenso ist ein Halteteil 3 mittels Schrauben an der Lüfterhaube 8 gehalten, wobei die Schrauben durch durch die Lüfterhaube 8 durchgehende Ausnehmungen durchgeführt sind und in Muttern eingeschraubt sind, so dass die Schraubenköpfe der Schrauben das Halteteil 3 an die Lüfterhaube 8 andrücken. Alternativ sind diese Schrauben und Muttern umgekehrt anordenbar.

Ein Stangenteil 4 ist drehgelagert im Halteteil 3, sodass das Halteteil in einer ersten Drehstellung im Verbindungsteil 2 kraftschlüssig und/oder eingeklipst aufgenommen ist oder in einer zweiten Drehstellung zum Handlüfthebel, insbesondere Hebelteil, hin gerichtet ausrichtbar ist.

In der zweiten Drehstellung des Stangenteils 4 begrenzt der auf den vom Halteteil 3 abgewandten Endbereich des Stangenteils 4 aufgesetzte Justierkopf 6, insbesondere der auf den vom Halteteil 3 abgewandten Endbereich des Stangenteils 4 aufgesetzte, mit einer Gewindebohrung des Justierkopfes 6 auf einen Gewindebereich des Stangenteils 4 aufgeschraubte Justierkopf 6, den Schwenkbereich des Handlüfthebels, insbesondere Hebelteils 7. Somit ist in der zweiten Drehstellung die Bremse elektromagnetisch lüftbar und nur in der ersten Drehstellung von Hand gelüftet.

Auf diese Weise ist das Lüften der Bremse mit der Schwenkbewegung des Stangenteils 4 erzwingbar oder freigebbar. Bei freigegebenem Arbeitsbereich der Ankerscheibe ist die Bremse durch das Bestromen der Spule lüftbar. Dabei begrenzt das Stangenteil 4 mit dem verbundenen Justierkopf 6 das Hebelteil 7 und verhindert somit ein Handbetätigtes Lüften der Bremse. Hingegen ist bei Aufnahme des Stangenteils 4 im Verbindungsteil 2 der Arbeitsbereich der Ankerscheibe mittels des Schwenkens des Handlüfthebels begrenzbar und somit eine Handlüftung der Bremse ausführbar.

Der Justierkopf 6 weist an seinem dem Hebelteil 7 zuwendbaren Endbereich eine mittig angeordnete Vertiefung auf, in der das Hebelteil 7 aufnehmbar ist.

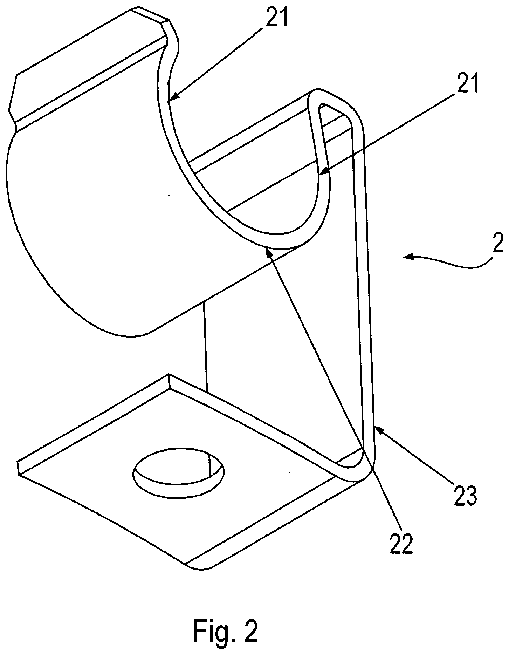

Wie in Figur 2 gezeigt, weist das Verbindungsteil ein Joch 22 auf, an welchem zwei voneinander beabstandete Schenkel 21 verbunden sind, die jeweils zum Joch 22 elastisch auslenkbar sind, insbesondere zum kraftschlüssigen Halten oder Einklipsen des in der zweiten Drehstellung zwischen den beiden Schenkeln 21 aufgenommenen Stangenteils 4,
insbesondere wobei das Joch 22 und die beiden Schenkel 21 samt dem Haltewinkelbereich 23 einstückig, insbesondere einteilig, ausgeführt sind, insbesondere als aus einem Blechstück gefertigtes Stanzbiegeteil,
insbesondere wobei ein Haltewinkelbereich 23 mit einem ersten der Schenkel 21 verbunden ist oder einstückig ausgeführt ist und der Haltewinkelbereich 23 eine durchgehende Ausnehmung aufweist, durch welche eine Schraube hindurchragt, die in eine Gewindebohrung des Gehäuses 1, insbesondere Motorlagerflansches des Gehäuses 1, eingeschraubt ist. Von Vorteil ist dabei, dass das Stangenteil 4 sicher und kraftschlüssig befestigbar ist. Aber auch ein Einklipsen ist ausführbar.

Bei weiteren erfindungsgemäßen Ausführungsbeispielen ist das Stangenteil 4 mit dem Justierkopf 6 zusammen einstückig ausgeführt.

### Bezugszeichenliste

1 Gehäuse
2 Verbindungsteil
3 Halteteil
4 Stangenteil
5 Mutter
6 Justierkopf
7 Hebelteil des Handlüfthebels
8 Lüfterhaube
21 Schenkel
22 Joch
23 Haltewinkelbereich

## Patentansprüche

1. Elektromotor mit einer elektromagnetisch betätigbaren Bremse,
wobei die Bremse mittels eines schwenkbar angeordneten Handlüfthebels, insbesondere Hebelteils (7), lüftbar ist, insbesondere bei Ausfall der Spannungsversorgung Stromausfall oder Nichtbestromung der Bremse,
wobei am Elektromotor eine Sicherungseinrichtung zur Begrenzung der Schwenkbewegung des Handlüfthebels angeordnet ist,
**wobei** die Sicherungseinrichtung zumindest ein Halteteil (3), ein Stangenteil (4) und ein Gelenk aufweist,
wobei ein Halteteil (3) am Elektromotor befestigt ist,
wobei ein Stangenteil (4) mittels eines zwischen Stangenteil (4) und Halteteil (3) ausgebildeten Gelenks drehbar angeordnet ist,
wobei die Begrenzung der Schwenkbewegung des Handlüfthebels von der Drehstellung des Stangenteils (4) abhängig ist,
**dadurch gekennzeichnet, dass**
**das Stangenteil (4) einen Justierkopf (6) aufweist, dessen Schwerpunkt relativ zum Schwerpunkt des Stangenteils (4) verschiebbar angeordnet ist, insbesondere mittels einer Schraubverbindung zwischen Justierkopf (6) und Stangenteil (4).**

2. Elektromotor nach Anspruch 1
**dadurch gekennzeichnet, dass**
die Sicherungseinrichtung ein Verbindungsteil (2) aufweist,
wobei das Verbindungsteil (2) am Elektromotor befestigt ist.

3. Elektromotor nach Anspruch 2,
**dadurch gekennzeichnet, dass**
der Elektromotor ein Gehäuse (1) aufweist, an dem eine Lüfterhaube (8) des Elektromotors befestigt ist,
insbesondere wobei ein Lüfter mit einer Rotorwelle des Elektromotors drehfest verbunden ist, wobei die Lüfterhaube (8) den Lüfter zumindest teilweise umgibt, insbesondere radial umgibt.

4. Elektromotor nach Anspruch 2 oder 3,
**dadurch gekennzeichnet, dass**
das Halteteil (3) zwischen dem Verbindungsteil (2) und dem Handlüfthebel, insbesondere Hebelteil (7), angeordnet ist,
insbesondere wobei das Halteteil (3) vom Verbindungsteil (2) und vom Handlüfthebel beabstandet angeordnet ist.

5. Elektromotor nach einem der Ansprüche 2 bis 4,
**dadurch gekennzeichnet, dass**
in einer ersten Drehstellung des Stangenteils (4) die Schwenkbewegung des Handlüfthebels vom Stangenteil (4), insbesondere Stangenteil (4) über dem mit dem Stangenteil (4)
verbundenen Justierkopf (6), begrenzt ist und in einer zweiten Drehstellung des Stangenteils (4) die Schwenkbewegung nicht vom Stangenteil (4), insbesondere nicht vom Stangeteil oder Justierkopf (6), begrenzt ist,
oder dass
in einer ersten Drehstellung des Stangenteils (4) der Schwenkbewegungsfreiheitsgrad, insbesondere also der von dem Stangenteil (4) für eine Schwenkbewegung zugelassene Schwenkwinkelbereich des Handlüfthebels, kleiner ist als in der zweiten Drehstellung.

6. Elektromotor nach einem der Ansprüche 2 bis 5,
**dadurch gekennzeichnet, dass**
in der zweiten Drehstellung das Stangenteil (4) im Verbindungsteil (2) aufgenommen ist, insbesondere eingeklipst ist.

7. Elektromotor nach einem der Ansprüche 2 bis 6,
**dadurch gekennzeichnet, dass**
das Stangenteil (4) einen Außengewindebereich aufweist, auf den eine Mutter (5) aufgeschraubt ist und den einen Innengewindebereich aufweisenden Justierkopf (6),
wobei der Justierkopf (6) den in der ersten Drehstellung dem Hebelteil (7) zugewandten Endbereich des Stangenteils (4) umgibt und eine Vertiefung aufweist, in welcher das Hebelteil (7) aufnehmbar ist, insbesondere zur Begrenzung des Schwenkbereichs,
insbesondere wobei die Mutter (5) am Justierkopf (6) anliegt und als Kontermutter fungiert.

8. Elektromotor nach einem der Ansprüche 2 bis 7,
**dadurch gekennzeichnet, dass**
das Halteteil (3) an einem Gehäuseteil oder an einer Lüfterhaube (8) des Elektromotors befestigt ist.

9. Elektromotor nach einem der Ansprüche 2 bis 8,
**dadurch gekennzeichnet, dass**
das Verbindungsteil (2) an einem Gehäuseteil oder an einer Lüfterhaube (8) des Elektromotors befestigt ist.

10. Elektromotor nach einem der Ansprüche 2 bis 9,
**dadurch gekennzeichnet, dass**
das Verbindungsteil (2) ein Joch (22) aufweist, an welchem zwei Schenkel (21) verbunden sind, die jeweils elastisch auslenkbar sind, insbesondere zum kraftschlüssigen Halten oder Einklipsen des in der zweiten Drehstellung zwischen den beiden Schenkeln aufgenommenen Stangenteils (4),
insbesondere wobei das Joch (22) und die beiden Schenkel (21) einstückig, insbesondere einteilig, ausgeführt sind, insbesondere als aus einem Blechstück gefertigtes Stanzbiegeteil,
insbesondere wobei ein Haltewinkelbereich (23) mit einem ersten der Schenkel (21) verbunden ist oder einstückig ausgeführt ist und der Haltewinkelbereich (23) eine durchgehende Ausnehmung aufweist, durch welche eine Schraube hindurchragt, die in eine Gewindebohrung des Gehäuseteils, insbesondere Motorlagerflansches, eingeschraubt ist.

11. Elektromotor nach einem der vorangegangenen Ansprüche,
**dadurch gekennzeichnet, dass**
die Bremse einen mit der Rotorwelle des Elektromotors drehfest und axial verschiebbar angeordneten Bremsbelagträger aufweist,
insbesondere wobei der Bremsbelagträger eine Innenverzahnung aufweist, die im Eingriff ist mit einer an der Rotorwelle angeordneten Verzahnung.

12. Elektromotor nach einem der vorangegangenen Ansprüche,
**dadurch gekennzeichnet, dass**
die Bremse einen Magnetkörper aufweist, in welchem eine Spule der Bremse aufgenommen ist,
wobei axial zwischen dem Magnetkörper und dem Bremsbelagträger eine Ankerscheibe angeordnet ist, die drehfest mit dem Magnetkörper verbunden ist und relativ zum Magnetkörper verschiebbar angeordnet ist.

13. Elektromotor nach einem der vorangegangenen Ansprüche,
**dadurch gekennzeichnet, dass**
der Handlüfthebel, insbesondere das Hebelteil (7), über ein Gelenk mit einem Begrenzungsmittel verbunden ist, das in axialer Richtung verschiebbar angeordnet ist, wobei das Begrenzungsmittel die Ankerscheibe axial begrenzt,
insbesondere so, dass der maximale Abstand zwischen Ankerscheiben und Magnetkörper abhängig vom Schwenkwinkel des Handlüfthebels, insbesondere Hebelteils (7), festlegbar ist,
insbesondere wobei das Begrenzungsmittel als durch die Ankerscheibe durchgehender Bolzen ausgeführt ist, der auf der vom Magnetkörper abgewandten Seite der Ankerscheibe eine Verbreiterung aufweist, welche als Begrenzung die Ankerscheibe in axialer Richtung begrenzt,
insbesondere wobei am von der Verbreiterung abgewandten Ende des Bolzens der Bolzen mit dem Handlüfthebel mittels eines Gelenks, insbesondere Drehgelenks, verbunden ist, wobei der Handlüfthebel zum Bolzen einen etwa rechtwinkligen Winkel, insbesondere zwischen 60° und 120°, aufweist.

14. Elektromotor nach einem der vorangegangenen Ansprüche,
**dadurch gekennzeichnet, dass**
der Magnetkörper mit dem Gehäuse (1) drehfest verbunden ist.

## Claims

1. Electric motor having an electromagnetically actuable brake,
wherein the brake can be released by means of a pivotably arranged manual release lever, in particular a lever part (7), in particular in the event of failure of the voltage supply or current supply or when no power is being supplied to the brake, wherein a safety device for limiting the pivoting movement of the manual release lever is arranged on the electric motor, wherein the safety device comprises at least one holding part (3), a rod part (4) and a joint,
wherein a holding part (3) is fastened to the electric motor, wherein a rod part (4) is arranged rotatably by means of a joint formed between the rod part (4) and the holding part (3), wherein the limitation of the pivoting movement of the manual release lever depends on the rotational position of the rod part (4),
**characterized in that**
the rod part (4) comprises an adjusting head (6), the center of gravity of which is arranged in such a way as to be displaceable relative to the center of gravity of the rod part (4), in particular by means of a screw connection between the adjusting head (6) and the rod part (4).

2. Electric motor according to claim 1,
**characterized in that**
the safety device comprises a connecting part (2),
wherein the connecting part (2) is fastened to the electric motor.

3. Electric motor according to claim 2,
**characterized in that**
the electric motor comprises a housing (1), to which a fan cowl (8) of the electric motor is fastened,
in particular wherein a fan is connected to a rotor shaft of the electric motor for conjoint rotation, wherein the fan cowl (8) at least partially surrounds the fan, in particular surrounds it radially.

4. Electric motor according to claim 2 or 3,
**characterized in that**
the holding part (3) is arranged between the connecting part (2) and the manual release lever, in particular the lever part (7), in particular wherein the holding part (3) is arranged at a distance from the connecting part (2) and from the manual release lever.

5. Electric motor according to any one of claims 2 to 4, **characterized in that**
in a first rotational position of the rod part (4) the pivoting movement of the manual release lever is limited by the rod part (4), in particular is limited by the rod part (4) via the adjusting head (6) connected to the rod part (4), and in a second rotational position of the rod part (4) the pivoting movement is not limited by the rod part (4), in particular is not limited by the rod part or the adjusting head (6),
or **in that**
the degree of freedom of the pivoting movement, that is to say in particular the pivot angle range of the manual release lever permitted by the rod part (4) for a pivoting movement, is smaller in a first rotational position of the rod part (4) than in the second rotational position.

6. Electric motor according to any one of claims 2 to 5,
**characterized in that**
in the second rotational position the rod part (4) is received in the connecting part (2), in particular is clipped into the latter.

7. Electric motor according to any one of claims 2 to 6,
**characterized in that**
the rod part (4) comprises an externally threaded region, onto which a nut is screwed, and the adjusting head (6) having an internally threaded region,
wherein the adjusting head (6) surrounds the end region of the rod part (4) facing toward the lever part (7) in the first rotational position and has a recess in which the lever part (7) can be received, in particular in order to limit the pivoting range,
in particular wherein the nut (5) bears against the adjusting head (6) and acts as a lock nut.

8. Electric motor according to any one of claims 2 to 7,
**characterized in that**
the holding part (3) is fastened to a housing part or to a fan cowl (8) of the electric motor.

9. Electric motor according to any one of claims 2 to 8,
**characterized in that**
the connecting part (2) is fastened to a housing part or to a fan cowl (8) of the electric motor.

10. Electric motor according to any one of claims 2 to 9,
**characterized in that**
the connecting part (2) comprises a yoke (22), to which two legs (21) are connected, which are each elastically deflectable, in particular in order to force-fittingly hold or clip the rod part (4) received between the two legs in the second rotational position,
in particular wherein the yoke (22) and the two legs (21) are formed in one piece, in particular as a single part, in particular as a stamped and bent part made from one piece of sheet metal,
in particular wherein a bracket region (23) is connected to a first of the legs (21) or is formed in one piece therewith, and the bracket region (23) has a through-aperture through which a screw projects, which is screwed into a threaded bore of the housing part, in particular the motor bearing flange.

11. Electric motor according to any one of the preceding claims,
**characterized in that**
the brake comprises a brake lining carrier rotationally fixed to the rotor shaft of the electric motor and arranged in an axially displaceable manner,
in particular wherein the brake lining carrier has an internal toothing which meshes with a toothing arranged on the rotor shaft.

12. Electric motor according to any one of the preceding claims,
**characterized in that**
the brake comprises a magnetic body, in which a coil of the brake is accommodated,
wherein an armature disk is arranged axially between the magnetic body and the brake lining carrier, which armature disk is connected to the magnetic body for conjoint rotation and is arranged in such a way as to be displaceable relative to the magnetic body.

13. Electric motor according to any one of the preceding claims,
**characterized in that**
the manual release lever, in particular the lever part (7), is connected via a joint to a limiting means, which is arranged in such a way as to be displaceable in the axial direction, wherein the limiting means axially limits the armature disk,
in particular such that the maximum distance between the armature disk and the magnetic body can be determined as a function of the pivot angle of the manual release lever, in particular the lever part (7),
in particular wherein the limiting means is embodied as a bolt which passes through the armature disk and which has a widening on the side of the armature disk remote from the magnetic body, which widening, as a limiter, limits the armature disk in the axial direction,
in particular wherein, at the end of the bolt remote from the widening, the bolt is connected to the manual release lever by means of a joint, in particular a rotary joint, wherein the manual release lever is at an approximately right angle to the bolt, in particular between 60° and 120°.

14. Electric motor according to any one of the preceding claims,
**characterized in that**
the magnetic body is connected to the housing (1) for conjoint rotation.

## Revendications

1. Moteur électrique comprenant un frein à commande électromagnétique,
le frein pouvant être ventilé au moyen d'un levier de ventilation manuel agencé de manière pivotante, en particulier d'une partie levier (7), en particulier en cas de défaillance de l'alimentation électrique, de panne de courant, ou de non-alimentation du frein,
un dispositif de sécurité, qui permet de limiter le mouvement de pivotement du levier de ventilation manuel, étant agencé au niveau du moteur électrique,
le dispositif de sécurité présentant au moins une partie de retenue (3), une partie tige (4) et une articulation,
une partie de retenue (3) étant fixée au moteur électrique,
une partie tige (4) étant agencée de manière rotative au moyen d'une articulation formée entre la partie tige (4) et la partie de retenue (3),
la limitation du mouvement de pivotement du levier de ventilation manuel dépendant de la position de rotation de la partie tige (4),
**caractérisé en ce que**
la partie tige (4) présente une tête d'ajustement (6) dont le centre de gravité est agencé de manière à pouvoir coulisser par rapport au centre de gravité de la partie tige (4), en particulier au moyen d'une liaison vissée entre la tête d'ajustement (6) et la partie tige (4).

2. Moteur électrique selon la revendication 1,
**caractérisé en ce que**
le dispositif de sécurité présente une partie de liaison (2),
la partie de liaison (2) étant fixée au moteur électrique.

3. Moteur électrique selon la revendication 2,
**caractérisé en ce que**
le moteur électrique présente un carter (1) auquel est fixé un capot de ventilateur (8) du moteur électrique,
un ventilateur étant en particulier relié de manière solidaire en rotation à un arbre de rotor du moteur électrique, le capot de ventilateur (8) entourant au moins partiellement, en particulier radialement, le ventilateur.

4. Moteur électrique selon la revendication 2 ou 3,
**caractérisé en ce que**
la partie de retenue (3) est agencée entre la partie de liaison (2) et le levier de ventilation manuel, en particulier la partie levier (7),
la partie de retenue (3) étant en particulier agencée à distance de la partie de liaison (2) et du levier de ventilation manuel.

5. Moteur électrique selon l'une quelconque des revendications 2 à 4,
**caractérisé en ce que**
dans une première position de rotation de la partie tige (4), le mouvement de pivotement du levier de ventilation manuel est limité par la partie tige (4), en particulier par la partie tige (4) par l'intermédiaire de la tête d'ajustement (6) reliée à la partie tige (4) et, dans une deuxième position de rotation de la partie tige (4), le mouvement de pivotement n'est pas limité par la partie tige (4), en particulier n'est pas limité par la partie tige ou la tête d'ajustement (6),
ou **en ce que**
dans une première position de rotation de la partie tige (4), le degré de liberté de mouvement de pivotement, en particulier donc la plage angulaire de pivotement du levier de ventilation manuel autorisée par la partie tige (4) pour un mouvement de pivotement, est inférieur à ce qu'il est dans la deuxième position de rotation.

6. Moteur électrique selon l'une quelconque des revendications 2 à 5,
**caractérisé en ce que**
dans la deuxième position de rotation, la partie tige (4) est accueillie, en particulier est clipsée, dans la partie de liaison (2).

7. Moteur électrique selon l'une quelconque des revendications 2 à 6,
**caractérisé en ce que**
la partie tige (4) présente une région filetée extérieure, sur laquelle est vissé un écrou (5), et la tête d'ajustement (6) présentant une région filetée intérieure,
la tête d'ajustement (6) entourant la région d'extrémité de la partie tige (4) qui est tournée vers la partie levier (7) dans la première position de rotation, et présentant une cavité au sein de laquelle peut être accueillie la partie levier (7), en particulier afin de limiter la plage de pivotement,
l'écrou (5) étant en particulier en contact avec la tête d'ajustement (6) et faisant office de contre-écrou.

8. Moteur électrique selon l'une quelconque des revendications 2 à 7,
**caractérisé en ce que**
la partie de retenue (3) est fixée à une partie de carter ou à un capot de ventilateur (8) du moteur électrique.

9. Moteur électrique selon l'une quelconque des revendications 2 à 8,
**caractérisé en ce que**
la partie de liaison (2) est fixée à une partie de carter ou à un capot de ventilateur (8) du moteur électrique.

10. Moteur électrique selon l'une quelconque des revendications 2 à 9,
**caractérisé en ce que**
la partie de liaison (2) présente un cavalier (22) auquel sont reliées deux branches (21) pouvant respectivement être déviée de manière élastique, en particulier afin de retenir par complémentarité de force ou de clipser la partie tige (4) accueillie entre les deux branches dans la deuxième position de rotation,
le cavalier (22) et les deux branches (21) étant en particulier réalisés d'un seul tenant, en particulier d'une seule pièce, en particulier sous la forme d'une pièce pliée estampée réalisée à partir d'une tôle,
une région angulaire de retenue (23) étant en particulier reliée à une première des branches (21) ou étant réalisée d'un seul tenant, et la région angulaire de retenue (23) présentant un évidement traversant à travers lequel passe une vis qui est vissée dans un alésage fileté de la partie de carter, en particulier de la bride de palier de moteur.

11. Moteur électrique selon l'une quelconque des revendications précédentes,
**caractérisé en ce que**
le frein présente un support de garniture de frein agencé de manière déplaçable axialement et solidaire en rotation avec l'arbre de rotor du moteur électrique,
le support de garniture de frein présentant en particulier une denture intérieure qui est en prise avec une denture agencée au niveau de l'arbre de rotor.

12. Moteur électrique selon l'une quelconque des revendications précédentes,
**caractérisé en ce que**
le frein présente un corps magnétique au sein duquel est accueillie une bobine du frein,
un disque d'induit étant agencé axialement entre le corps magnétique et le support de garniture de frein, lequel disque d'induit est relié de manière solidaire en rotation au corps magnétique et est agencé de manière à pouvoir être déplacé par rapport au corps magnétique.

13. Moteur électrique selon l'une quelconque des revendications précédentes,
**caractérisé en ce que**
le levier de ventilation manuel, en particulier la partie levier (7), est relié par une articulation à un moyen de limitation qui est agencé de manière à pouvoir coulisser dans la direction axiale, le moyen de limitation limitant axialement le disque d'induit, en particulier de sorte que la distance maximale entre disque d'induit et corps magnétique peut être déterminée en fonction de l'angle de pivotement du levier de ventilation manuel, en particulier de la partie levier (7),
le moyen de limitation étant en particulier réalisé sous la forme d'un boulon qui traverse le disque d'induit et présente, sur le côté du disque d'induit qui est opposé au corps magnétique, un élargissement qui limite le disque d'induit dans la direction axiale,
le boulon étant en particulier, à l'extrémité du boulon qui est opposée à l'élargissement, relié au levier de ventilation manuel au moyen d'une articulation, en particulier d'une articulation rotative, le levier de ventilation manuel présentant un angle approximativement droit, en particulier compris entre 60° et 120°, par rapport au boulon.

14. Moteur électrique selon l'une quelconque des revendications précédentes,
**caractérisé en ce que**
le corps magnétique est relié de manière solidaire en rotation au carter (1).
